**Europäisches Patentamt**

**European Patent Office**

**Office européen des brevets**

(19)

(11) Publication number : **0 490 860 A1**

(12) # EUROPEAN PATENT APPLICATION

(21) Application number : **91870196.2**

(22) Date of filing : **05.12.91**

(51) Int. Cl.⁵ : **H01R 23/70, G06K 7/06**

(30) Priority : **07.12.90 BE 9001167**

(43) Date of publication of application :
**17.06.92 Bulletin 92/25**

(84) Designated Contracting States :
**AT BE CH DE DK ES FR GB GR IT LI LU MC NL SE**

(71) Applicant : **BELL TELEPHONE MANUFACTURING COMPANY Naamloze Vennootschap**
**Francis Wellesplein 1**
**B-2018 Antwerp (BE)**

(72) Inventor : **de Vuyst, Hugo Richard Natalis**
**Kasteeldreef 40**
**B-9230 Wetteren (BE)**
Inventor : **de Bruycker, Romain**
**Ten Otter 21**
**B-2989 Zoersel (BE)**

(74) Representative : **Vermeersch, Robert et al**
**BELL TELEPHONE MANUFACTURING COMPANY Naamloze Vennootschap Patent Department Francis Wellesplein 1**
**B-2000 Antwerp (BE)**

(54) **Electric contact device.**

(57) This device includes a contact element (12) which is brought into sliding contact with a contact element (15) of a chip card (14) over a distance d1. During this displacement a spring (9) is compressed. Subsequent to this displacement in one direction the chip card (14) is driven back by the spring (9) in the opposite direction and over a distance d2 smaller than d1 so that dust particles (16) possibly accumulated between the contact elements during the displacement d1 are moved away and contact takes place over clean contact surfaces.

FIG.1

FIG.2

FIG.3

EP 0 490 860 A1

The present invention relates to an electric contact device including at least a first contact element able to cooperate with a second contact element in such a way that while remaining in contact with one another one contact element is subjected, with respect to the other, to a displacement in one direction.

Such an electric contact device is already known from the published French patent application No 2623314. This device is an electric connector with a plurality of first contact elements and forms part of a chip card reader mounted in a card controlled apparatus adjacent a slot through which a chip card carrying a plurality of second contact elements may be inserted in the apparatus. Each first contact element is constituted by a cantilever blade element with a curved end and each second contact element on the card is a flat electrically conducting strip. The latter are brought into sliding contact with the curved ends of the blade elements when the chip card is introduced in the card controlled apparatus. This displacement of the second contact elements with respect to the first ones in one direction has a cleaning effect on the contact surfaces between these contact elements. However it may happen, especially in a dirty environment, that dirt, such as sand or other dust particles, scraped off during this displacement, heaps up between the contact elements at the end of the displacement. This may lead to a bad electric contact or in the worst case to a complete loss of contact.

An object of the invention is to provide an electric contact device of the above type but which guarantees a better electric contact.

This object is achieved due to the fact that it includes driving means to subject said one contact element subsequent to the first mentioned displacement to a second displacement, in a direction opposite to said one direction and while still remaining in contact with said other contact element.

Due to the relative displacement of the contact elements in the opposite direction, the above mentioned dirt is removed from the final contact surface between the contact elements, thereby realising a better electric contact.

Another characteristic of the invention is that said second displacement is shorter than said first mentioned displacement.

At the end of the second displacement the contact elements thus make contact at a location where the contact surface was cleaned during the first displacement, so that the result of the reciprocating displacement is a self cleaning electrical contact.

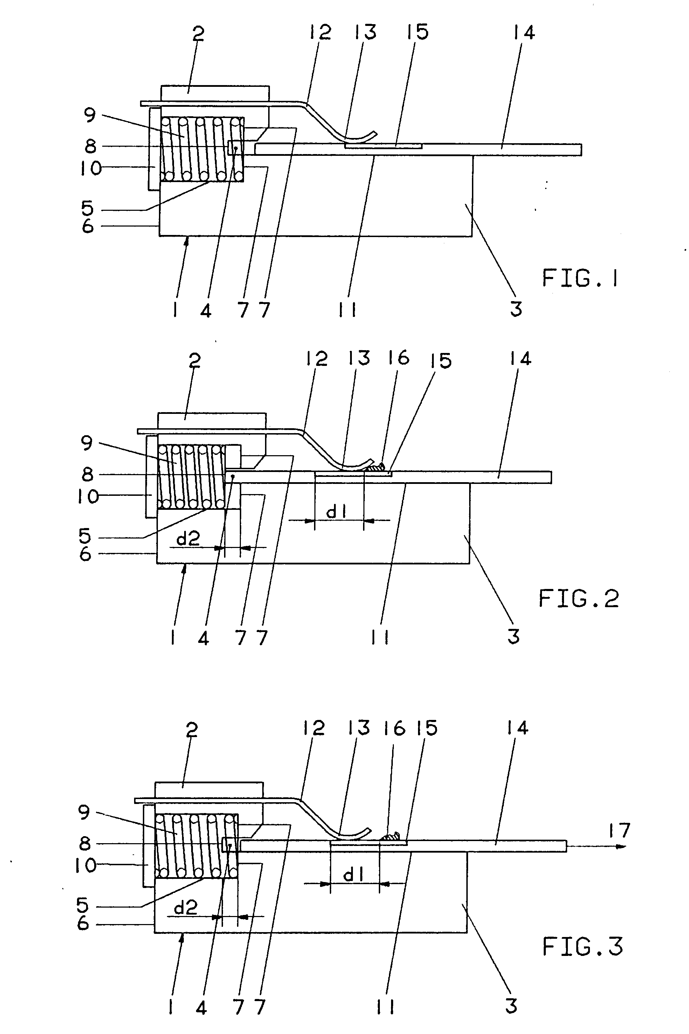

The above mentioned and other objects and features of the invention will become more apparent and the invention itself will be best understood by referring to the following description of an embodiment taken in conjunction with the accompanying drawings wherein Figs. 1, 2 and 3 show a central cross-section of an electric contact device according to the invention and of a cooperating contact element of a chip card in three different positions.

This electric contact device is an electric connector forming part of a chip card reader mounted in a card controlled apparatus adjacent a slot (not shown) through which a chip card may be inserted in the connector.

The contact device has a substantially L-shaped body generally indicated by 1 and having two legs 2 and 3. Leg 2 has a groove 4 which extends over its width but which in the middle is interrupted by a cylindrical cavity 5 which at its one end opens in a wall 6 and at its other end is delimited by abutments 7 extending beyond the bottom 8 of the groove 4. A helical spring 9 is mounted in the cavity 5 which is closed by a coverplate 10. The lower surface of the groove 4 and the upper surface of the leg 3 together form a card guiding surface 11 which is terminated by the bottom 8 of the groove 4 in which the spring 9 ends.

A number of cantilever contact elements are mounted in leg 2, only one of them, 12, being visible in the figures. This contact element has a curved end 13 directed towards the card guiding surface 11.

The electric contact device is able to cooperate with a chip card such as 14 whose upper surface is provided with a number of contact elements or strips equal to the number of contact elements 12 and of which only one, 15, is visible in the figures.

When the chip card 14 is inserted in the above mentioned slot of the apparatus it is guided by the card guiding surface 11 of the electric contact device. Three different successive positions of this card are shown in Figs. 1 to 3.

Fig. 1 shows the chip card 14 in a position wherein the end 13 of contact element 12 is beginning to make contact with the contact element 15 of the card 14 and wherein the spring 9 is in the released condition. When this card is further inserted in the apparatus and thus displaced over a distance d1, i.e. until its edge hits the bottom 8 of groove 4 as shown in Fig. 2, the spring 9 is compressed over a distance d2 smaller than d1. The spring is thus armed meaning that energy is stored therein.

During this displacement d1 from the position of Fig. 1 to that of Fig. 2 the contact element 15 remains in contact with contact element 12, 13. Thereby the surface of the contact element 15 is cleaned over this distance d1 due to the scraping action of the end 13 of contact element 12 thereon. The heap of dust particles thus possibly collected is represented by 16 and may more or less electrically isolate the contact elements 12, 13 and 15 from one another and cause interruption or worsening of the electric contact if no additional measures were taken. This adverse effect is eliminated because, when the chip card 14 is released the compressed spring 9 releases and drives back the chip card in the direction of arrow 17 over the above mentioned distance d2, as represented in Fig. 3. Due to this displacement in the opposite direction of the first displacement the heap 16 is displaced away from the contact surface of contact elements 13 and 15. Due to the fact that d2 is smaller than d1 the final contact area between the contact elements after the second displacement is located at a position cleaned by the scraping action performed during the first displacement. Thus a good self cleaning electric contact is realized.

It is clear that instead of the spring 9 one could use other elements for driving the card in the opposite direction, e.g. a resilient cushion or a driving motor.

While the principles of the invention have been described above in connection with specific apparatus, it is to be clearly understood that this description is made only by way of example and not as a limitation on the scope of the invention.

## Claims

1. Electric contact device including at least a first contact element (12) able to cooperate with a second contact element (15) in such a way that while remaining in contact with one another one contact element (15) is subjected, with respect to the other (12), to a displacement (d1) in one direction, characterized in that it includes driving means (9) to subject said one contact element (15) subsequent to the first mentioned displacement (d1) to a second displacement (d2), in a direction opposite to said one direction and while still remaining in contact with said other contact element (12).

2. Electric contact device according to claim 1, characterized in that said second displacement (d2) is shorter than said first mentioned displacement (d1).

3. Electric contact device according to claim 2, characterized in that during said first mentioned displacement (d1) energy is stored in said driving means (9).

4. Electric contact device according to claim 3, characterized in that said second contact element (15) is displaceable with respect to said first contact element (12, 13), said first mentioned displacement (d1) causing energy storage in a resilient member (9) constituting said driving means and the subsequent energy release giving rise to said second displacement (d2).

5. Electric contact device according to claim 4, characterized in that said resilient member is a spring (9) which when compressed stores energy.

6. Electric contact device according to claim 4, characterized in that said displaceable second contact element (15) is carried by a card (14) able to be inserted in an apparatus of which said contact device forms part to displace said second contact element (15) with respect to said first contact element (12, 13).

7. Electric contact device according to claims 5 and 6, characterized in that it includes a body (1) having a guide wall (11) for guiding said card (14) during said displacement and having a groove (4) with a bottom (8) terminating said guide wall (11) and extending over the width thereof, said spring (9) ending in said groove (4) and being compressed when said card (14) enters said groove (4) and until it hits the bottom (8) thereof.

8. Electric contact device according to claim 7, characterized in that said first contact element (12) is so mounted in said body (1) that said first displacement (d1) begins before said spring is compressed and ends when said card (14) hits said bottom (8) of said groove (4).

9. Electric contact device according to claim 7, characterized in that said spring is a helical spring (9) and that said body (1) has a cylindrical cavity (5) wherein said spring (9) is mounted, said cavity (5) being closed at one end by a cover plate (10) and being delimited at its other end by abutements (7) extending beyond the bottom (8) of said groove (4).

10. Electric contact device according to claim 6, characterized in that said first contact element is a blade spring (12) one end of which is fixedly mounted in said body (1) and having a curved second end (13), and that said second contact element is a flat strip (15) mounted on said card (14), said blade spring (12) exerting a pressure upon said strip (15) during said displacements (d1, d2).

FIG.1

FIG.2

FIG.3

**European Patent Office**

## EUROPEAN SEARCH REPORT

Application Number

EP 91 87 0196

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WO-A-7 900 543 (MORENO)<br>* abstract; figure 1 *<br>--- | 1 | H01R23/70<br>G06K7/06 |
| A | SU-A-445 178 (ERMAKOVA)<br>* abstract; figures 2,3 *<br>--- | 1 | |
| A | PATENT ABSTRACTS OF JAPAN<br>vol. 9, no. 144 (P-365)(1867) 19 June 1985<br>& JP-A-60 022 794 ( TOUKIYOU TATSUNO K.K. ) 5 February 1985<br>* abstract *<br>----- | 1 | |
| | | | **TECHNICAL FIELDS SEARCHED (Int. Cl.5 )**<br><br>H01R<br>G06K<br>H01H |

The present search report has been drawn up for all claims

| Place of search | Date of completion of the search | Examiner |
|---|---|---|
| THE HAGUE | 23 MARCH 1992 | HORAK A.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)